# EUROPÄISCHE PATENTSCHRIFT

(11) **EP 2 669 153 B1**
(45) Veröffentlichungstag und Bekanntmachung des Hinweises auf die Patenterteilung: **23.07.2014**
(21) Anmeldenummer: 12004134.8
(22) Anmeldetag: 29.05.2012
(51) Int. Cl.: B62D 59/04

(54) **Vorrichtung zur Fahrstabilisierung eines Rangiersystems für einen Anhänger**
Device for stabilising a manoeuvring system for a trailer
Dispositif de stabilisation de conduite d'un système de manoeuvre pour une remorque

(43) Veröffentlichungstag der Anmeldung: 04.12.2013
(73) Patentinhaber: Truma Gerätetechnik GmbH & Co. KG, 85640 Putzbrunn (DE)
(72) Erfinder: Schmoll, Andreas, 85630 Grasbrunn (DE); Venschott, Mathias, 81825 München (DE)
(74) Vertreter: Sties, Jochen

(56) Entgegenhaltungen:
- EP-A1- 1 886 905
- EP-A2- 1 826 107
- EP-A2- 2 455 278
- GB-A- 2 432 247

## Beschreibung

Die Erfindung betrifft ein Rangiersystem für einen Anhänger, insbesondere für Wohnwagen, Bootsanhänger, Pferdeanhänger, Marktanhänger, Lastanhänger u. ä.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger, z.B. im Wohnwagenbereich angeboten, die aufgrund ihrer Größe und damit ihres Gewichts nur noch unter Mühen von Hand verschoben werden können. Daher wurden Rangiersysteme entwickelt, die es ermöglichen, auch ohne Zugmaschine einen Anhänger mit Motorunterstützung zu verschieben bzw. zu drehen.

Aus der EP 0 827 898 A1 ist ein Rangiersystem mit einem Rangierantrieb (Hilfsantrieb) für einen Anhänger bekannt, bei dem eine Befestigungseinrichtung fest mit dem Fahrgestell des Anhängers verbunden ist. Die Befestigungseinrichtung trägt einen relativ zu der Befestigungseinrichtung bewegbaren Träger, von dem wiederum ein Antriebsmotor mit einer von dem Antriebsmotor antreibbaren Antriebsrolle gehalten wird. Weiterhin ist ein Bewegungsmechanismus vorgesehen, zum Bewegen des Trägers zwischen einer Ruheposition, in der die Antriebsrolle von einem Rad bzw. Reifen des Anhängers getrennt ist, und einer Antriebsposition, in der die Antriebsrolle gegen den Reifen des Trägers gedrückt wird.

Ein ähnlicher Rangierantrieb ist in der EP 1 925 540 A1 beschrieben.

Weitere Rangierantriebe sind in der EP 2 455 278 A2 und in der EP 188 6 905 A1 beschrieben. Derartige Rangierantriebe werden wenigstens paarweise an einem Anhänger, und zwar gegenüberliegend an den jeweiligen Rädern des Anhängers angeordnet. Bei Doppelachsen-Anhängern ist es auch möglich, auf jeder Seite des Anhängers zwei Rangierantriebe, nämlich für jedes Anhängerrad einen eigenen Rangierantrieb, vorzusehen.

Mit Hilfe der Fernbedienung ist es für den Bediener möglich, den Anhänger, z.B. den Wohnwagen, auch ohne ein Zugfahrzeug feinfühlig und präzise zu rangieren.

Nach dem Bewegen des Trägers in die Antriebsposition und damit dem Andrücken der Andrückrolle gegen das jeweils zugeordnete Rad des Anhängers kann der Bediener mit Hilfe einer Fernsteuerung den Anhänger bewegen. So ist es bekannt, mit Hilfe von Tasten oder einer entsprechenden Joysticksteuerung die beiden auf der linken und auf der rechten Seite des Anhängers vorgesehenen Rangierantriebe zu schalten.

Zum Beispiel können beide Rangierantriebe derart betrieben werden, dass ihre Antriebsrollen in die gleiche Richtung drehen, so dass auch die von den Antriebsrollen angetriebenen Anhängerräder in die gleiche Richtung bewegt werden. Dadurch kann eine Vorwärts- bzw. Rückwärtsfahrt des Anhängers erreicht werden. Ebenso ist es möglich, nur einen der Rangierantriebe zu aktivieren, während der andere Rangierantrieb stillsteht. Dadurch wird eine Rechts- bzw. Linkskurve erreicht.

Ebenso ist es möglich, die Anhängerräder entgegengesetzt anzutreiben, so dass das eine Rad vorwärts und das andere Rad rückwärts dreht. Dadurch erfolgt eine Drehung des Anhängers auf der Stelle, also um seine Hoch- bzw. Gierachse.

Manche Systeme erlauben zusätzlich eine Regelung der Geschwindigkeit der Antriebsmotoren, so dass die Geschwindigkeit der Fahrbewegung sowie der Radius während einer Kurvenfahrt einstellbar sind.

In der Praxis weicht der tatsächliche Fahrweg jedoch häufig vom gewünschten Fahrweg ab, wodurch immer wieder Korrekturen an der Fernbedienung nötig werden. Bei beengten Platzverhältnissen kann der gewünschte Rangierweg derart eingeschränkt sein, dass durch solche Abweichungen vom gewünschten Fahrweg eine Kollisionsgefahr mit Hindernissen (Häuserwände, Bäume, Fahrzeuge) besteht.

Die Ursachen für solche Abweichungen vom gewünschten Fahrweg sind vielfältig. Bodenunebenheiten wie Schlaglöcher oder Senken können zu unterschiedlichen Fahrwegen des linken und rechten Rades und zu unterschiedlichen Belastungen der beiden Rangierantriebe führen. Wenn der Anhänger auf einem Gefälle nicht exakt bergauf oder bergab rangiert wird, kommt es zu seitlichen Momenten auf den Anhänger, mit Abweichungen vom gewünschten Fahrweg. Zudem beeinflussen äußere Einflüsse die Antriebswirkung, wie z.B. die Griffigkeit des Untergrunds, Reifendrücke, Anpressdrücke der Antriebe, Windeinflüsse etc. Schließlich können auch die Antriebswirkungen der Rangierantriebe aufgrund von Fertigungs- oder Einbautoleranzen variieren.

All diese Bedingungen führen dazu, dass der Benutzer korrigierend in die Steuerung eingreifen muss, um den Anhänger auf dem gewünschten Fahrweg zu halten und Gefährdungen zu vermeiden. Dies verlangt vom Bediener ein hohes Maß an Aufmerksamkeit, das weit über das hinausgeht, was für die eigentliche Rangieraufgabe erforderlich wäre.

Der Erfindung liegt daher die Aufgabe zugrunde, ein Rangiersystem für einen Anhänger anzugeben, das den Bediener bei der Bewältigung seiner Rangieraufgabe unterstützt und ihm das Rangieren des Anhängers erleichtert.

Die Aufgabe wird erfindungsgemäß durch ein Rangiersystem nach Anspruch 1 sowie durch ein in dem nebengeordneten Anspruch definiertes Verfahren gelöst. Vorteilhafte Ausgestaltungen der Erfindung sind in den abhängigen Ansprüchen angegeben.

Es wird ein Rangiersystem für einen Anhänger angegeben, mit einem an dem Anhänger anordenbaren Fahrantrieb zum Erzeugen einer Fahrbewegung des Anhängers, einem Fahrtgeber zum Vorgeben eines Sollwerts für die Fahrbewegung des Anhängers, einer Bewegungserfassungseinrichtung zum Erfassen eines Istwerts der Fahrbewegung, und mit einer Fahrtregelungseinrichtung zum Vergleichen des Istwerts mit dem Sollwert und Bilden einer Regelabweichung als Differenz zwischen dem Istwert und dem Sollwert. Die Fahrtregelungseinrichtung ist ausgebildet, um die Regelabweichung durch Ansteuern des Fahrantriebs zu vermindern, vorzugsweise zu minimieren, und/oder um in Abhängigkeit von der Regelabweichung ein Warnsignal, insbesondere ein akustisches, optisches und/oder Vibrations-Warnsignal zu erzeugen.

Das Rangiersystem ist prinzipiell vollständig von dem Anhänger trennbar. Insbesondere kann das Rangiersystem auch später bei einem ansonsten funktionsfähigen Anhänger nachgerüstet werden. Der Anhänger selbst stellt somit nicht einen Teil des Rangiersystems dar. Es erfolgen lediglich Wechselwirkungen zwischen dem Rangiersystem und dem Anhänger über entsprechende Schnittstellen. Zu den Schnittstellen zählen z.B. die Kraftübertragungen vom Fahrantrieb auf den Anhänger sowie das Erfassen der Fahrbewegung des Anhängers durch die Bewegungserfassungseinrichtung.

Der Fahrantrieb dient zum Erzeugen einer Vortriebsbewegung des Anhängers, also insbesondere einer Vorwärts- oder Rückwärtsfahrt. Weiterhin kann mit Hilfe des Fahrantriebs eine Gierbewegung um eine Hochachse des Anhängers erzeugt werden, z.B. für eine Kurvenfahrt, in dem die beiden Fahrantriebe mit unterschiedlichen Geschwindigkeiten angesteuert werden. Der Fahrantrieb kann somit jede beliebige Fahrbewegung des Anhängers erreichen. Außer der normalen Geradeausfahrt (Vorwärts, Rückwärts) sind auch Links- und Rechtskurven möglichen, die ebenfalls in Vorwärts- oder Rückwärtsrichtung gefahren werden können. Bei entsprechender Abstimmung des Fahrantriebs können die Kurvenradien variiert werden. Zudem ist es möglich, auch eine Drehung des Anhängers auf der Stelle zu bewirken. Generell besteht die Möglichkeit, die Fahrgeschwindigkeit zu variieren, z.B. stufenweise oder stufenlos. Die hier beschriebenen Bewegungsmöglichkeiten des Anhängers sind im Prinzip aus dem Stand der Technik bereits bekannt.

Der insbesondere vom Bediener vorgegebene Fahrwunsch kann über einen Fahrtgeber eingegeben werden, mit dem ein Sollwert für die Fahrbewegung des Anhängers vorgebbar ist. Der Fahrtgeber kann Bestandteil einer Fernbedienung sein, bei der die Steuerbefehle mit Hilfe einer Kabelverbindung oder über eine drahtlose Verbindung (Infrarot, Funk, optisch) die Fahrbefehle an die Steuerung des Rangiersystems übermittelt werden. Der Fahrtgeber kann ein Bedienelement oder auch mehrere, gegebenenfalls verschiedene Bedienelemente aufweisen, mit denen der Fahrer bzw. Bediener seinen Fahrwunsch eingeben kann.

Weiterhin ist eine Bewegungserfassungseinrichtung zum Erfassen eines Istwerts der Fahrbewegung vorgesehen. Mit Hilfe der Bewegungserfassungseinrichtung kann somit festgestellt werden, in welcher Weise der Anhänger tatsächlich bewegt wird. Somit können mit Hilfe der Bewegungserfassungseinrichtung insbesondere Geradeaus- oder Kurvenbewegungen detektiert werden, die sich auch aus der Überlagerung von Vorwärts-, Rückwärts- und Drehbewegungen des Anhängers ergeben. Die Bewegungserfassungseinrichtung kann in der Lage sein, die Bewegung des Anhängers relativ zur Umgebung, insbesondere über Grund festzustellen.

Mit der Fahrtregelungseinrichtung kann ein Vergleich zwischen dem von der Bewegungserfassungseinrichtung erfassten Istwert und dem vom Fahrtgeber vorgegebenen Sollwert vorgenommen werden. Der Vergleich in Form einer Regelabweichung ist ein Kriterium dafür, wie präzise die Bewegung des Anhängers den Vorgaben des Bedieners folgt.

Auf Basis der somit festgestellten Regelabweichung (Abweichung der tatsächlichen Bewegung des Anhängers von der vom Bediener gewünschten Sollbewegung) können verschiedene Maßnahmen ergriffen werden, die insbesondere von der Fahrtregelungseinrichtung umgesetzt werden können. So kann die Fahrtregelungseinrichtung derart ausgebildet sein, um die Regelabweichung durch Ansteuern des Fahrantriebs zu minimieren oder zumindest zu reduzieren. Ergänzend oder alternativ ist es auch möglich, dass die Fahrtregelungseinrichtung in Abhängigkeit von der Regelabweichung ein Warnsignal erzeugt.

Durch die Verringerung oder Minimierung der Regelabweichung können Korrekturen des Benutzers weitgehend überflüssig gemacht werden. Der Anhänger wird durch die Eingriffe der Fahrtregelungseinrichtung, d.h. durch das Ansteuern des Fahrantriebs genau auf der Spur gehalten, die der Bediener wünscht. Gibt der Bediener z.B. eine reine Geradeausfahrt vor, kann die Fahrtregelungseinrichtung durch Ansteuern des Fahrantriebs dafür sorgen, dass der Anhänger tatsächlich exakt geradeaus fährt, und zwar unabhängig von den oben beschriebenen Störeinflüssen.

Die Fahrtregelungseinrichtung greift in diesem Fall also unmittelbar in die Bewegung des Antriebs ein und bewirkt mit einer Feinfühligkeit, die auch von einem geübten Bediener kaum erreicht werden kann, dass der Anhänger den Kursvorgaben des Bedieners folgt. Auch bei einer gewünschten Kurvenfahrt kann der Anhänger exakt auf dem gewünschten vorgegebenen Kurvenradius verfahren werden.

Zusätzlich, aber auch alternativ, ist es möglich, das Warnsignal für den Bediener zu erzeugen, wenn die Fahrtregelungseinrichtung eine Abweichung der Fahrbewegung des Anhängers von der Kursvorgabe feststellt, z.B. bei Überschreiten eines vorgegebenen Grenzwerts für die Abweichung. So kann z.B. der Bediener gewarnt und aufgefordert werden, seinerseits Korrekturmaßnahmen zu ergreifen. Das Warnsignal kann dem Bediener in Form von optischen, akustischen oder Vibrations-Signalen übermittelt werden. Zum Beispiel kann das Warnsignal auch auf der vom Bediener in der Hand gehaltenen Fernbedienungseinheit angezeigt oder in Form von für den Bediener z.B. an der Fernbedienungseinheit fühlbaren Signalen (z.B. Vibration) übermittelt werden.

Die Ausgabe eines Warnsignals kann auch dann sinnvoll sein, wenn zunächst die Fahrtregelungseinrichtung durch Eingriffe in den Fahrantrieb versucht hat, die Abweichung der Fahrbewegung auszuregeln, diese Maßnahmen jedoch nicht ausreichen, um die Fahrbewegung zu stabilisieren. Der Bediener wird dann durch das Warnsignal auf die möglicherweise kritische Situation hingewiesen und kann seinerseits eingreifen. Die Ausgabe des Warnsignals kann erfolgen, wenn ein entsprechender Grenzwert für die Abweichung überschritten wird oder wenn es der Fahrtregelungseinrichtung über einen vorgegebenen Zeitraum nicht gelingt, die Abweichung auszuregeln.

Der Fahrantrieb kann wenigstens zwei Rangierantriebe aufweisen, wobei die Rangierantriebe auf gegenüberliegenden Seiten des Anhängers jeweils im Bereich eines Rads des Anhängers anordenbar sind, und wobei durch jeden der Rangierantriebe jeweils das zugeordnete Rad des Anhängers drehend antreibbar ist. Bei diesem an sich bekannten Aufbau übernehmen die beiden Rangierantriebe die Funktion des Fahrantriebs und können sowohl Geradeaus- als auch Kurvenfahrten verwirklichen. Die beiden Rangierantriebe sind z.B. auf den gegenüberliegenden Seiten einer Fahrzeugachse angeordnet und können dort jeweils das ihnen zugeordnete Anhängerrad antreiben. In dieser Weise ist es möglich, dass die Rangierantriebe einerseits die Vortriebsbewegung in Vorwärts- bzw. Rückwärtsrichtung und andererseits aber auch beliebige Drehbewegungen des Anhängers zum Erzeugen von Kurvenfahrten oder Drehungen erzeugen können.

Für größere oder schwerere Anhänger ist es auch möglich, mehr als zwei Rangierantriebe, z.B. vier Rangierantriebe für Doppelachsen-Anhänger vorzusehen, wobei in diesem Fall auf jeder Seite des Anhängers zwei Antriebe vorgesehen sind, die jeweils ein dort vorhandenes Anhängerrad antreiben.

Die Bewegungserfassungseinrichtung kann an dem Anhänger anordenbar sein. Dies ist vorteilhaft, weil dann die Bewegungserfassungseinrichtung unmittelbar den Bewegungen des Anhängers ausgesetzt ist und mit diesem die Bewegungen vollzieht. Das Beobachten der Bewegung des Anhängers von außen, z.B. mit Hilfe von Kameras oder externen Detektoren, ist zwar prinzipiell möglich, aber demgegenüber aufwendiger.

Wenigstens ein Teil der Bewegungserfassungseinrichtung kann an dem Anhänger räumlich getrennt von dem Rangierantrieb anordenbar sein. So ist es bekannt, dass die Rangierantriebe aufgrund ihrer kompakten Bauweise unter Umständen mit hohen elektrischen Strömen betrieben werden, die zwangsläufig starke Magnetfelder in ihrem Umfeld erzeugen. Um das Messverhalten der Bewegungserfassungseinrichtung nicht zu beeinträchtigen und um insbesondere Störungen durch die induzierten Magnetfelder zu vermeiden, kann es daher zweckmäßig sein, die sensiblen Komponenten der Bewegungserfassungseinrichtung oder auch die gesamte Bewegungserfassungseinrichtung räumlich von den Rangierantrieben zu trennen und in einem Bereich des Anhängers anzuordnen, der den hohen elektrischen Strömen nicht ausgesetzt ist.

Ebenso ist es möglich, dass die Bewegungserfassungseinrichtung baulich in die Fahrtregelungseinrichtung integriert ist, um die Vielzahl der einzelnen, am Anhänger zu montierenden Komponenten gering zu halten.

Der von der Bewegungserfassungseinrichtung abgegebene Istwert wird in der Fahrtregelungseinrichtung mit dem vom Bediener mittels des Fahrtgebers vorgegebenen Sollwert verglichen. Die Fahrtregelungseinrichtung steuert den Fahrantrieb derart, dass eine Differenz zwischen Ist- und Sollwert minimal wird. Das bedeutet, dass z.B. durch Bodeneffekte hervorgerufene Richtungsänderungen bei der Bewegung des Anhängers unmittelbar durch die Bewegungserfassungseinrichtung registriert werden können, so dass die Fahrtregelungseinrichtung eine entsprechende Gegenkorrektur vornehmen und den Anhänger wieder auf die vom Bediener gewünschte und in Form des Sollwerts vorgegebene Fahrbewegung, z.B. einen Kurs über Grund bringen kann. Das hat zur Folge, dass der Anhänger selbst auf schrägem oder unebenem Untergrund einen konstanten Geradeauslauf vollziehen kann. Weiterhin ist eine koordinierte Kurvenfahrt mit gleichzeitiger Drehung und Vorwärtsbewegung entsprechend den Wünschen des Bedieners möglich, ohne dass der Bediener permanent mit dem Fahrtgeber korrigierend eingreifen müsste.

Jeder der Rangierantriebe kann aufweisen: Eine Befestigungseinrichtung zum Befestigen des Rangierantriebs an dem Anhänger, einen relativ zu der Befestigungseinrichtung bewegbaren Träger, einen von dem Träger gehaltenen Antriebsmotor, und eine von dem Antriebsmotor drehend antreibbare Antriebsrolle, über die das Rad eines Anhängers antreibbar ist. Der Aufbau eines derartigen Rangierantriebs ist z.B. aus den oben genannten Schriften zum Stand der Technik prinzipiell bekannt.

Darüber hinaus kann eine Bewegungseinrichtung zum Bewegen des Trägers zwischen einer Ruheposition, in der die Antriebsrolle von dem zugeordneten Rad des Anhängers getrennt ist, und einer Antriebsposition, in der die Antriebsrolle gegen das Rad des Anhängers gedrückt wird, vorgesehen sein. Damit kann das Rangiersystem dann, wenn es nicht benötigt wird, weil z.B. der Anhänger an einer Zugmaschine angehängt ist, vollständig deaktiviert werden.

Die Fahrbewegung des Anhängers kann durch verschiedene Parameter bestimmt sein. So kann die Fahrbewegung des Anhängers als Parameter eine Fahrtrichtung, eine Ausrichtung des Anhängers bzw. des Chassis, eine Drehrate des Anhängers, eine Gierrate um die Gierachse des Anhängers, eine Fahrtgeschwindigkeit, eine Kurvengeschwindigkeit, eine Drehgeschwindigkeit eines Rads des Anhängers, eine Drehgeschwindigkeit einer Antriebsrolle eines Rangierantriebs und/oder eine Drehgeschwindigkeit eines Antriebsmotors eines Rangierantriebs aufweisen. Besonders relevante Kriterien werden die Fahrtrichtung und das Drehverhalten (Drehrate bzw. Gierrate) des Anhängers sein, die die Fahrbewegung widerspiegeln. Ein Beobachten und Erfassen dieser Bewegungsparameter ermöglicht präzise Rückschlüsse auf das tatsächliche Fahrverhalten des Anhängers.

Dementsprechend kann der Fahrtgeber zum Vorgeben eines Sollwerts für die Fahrtrichtung, die Ausrichtung, die Drehrate, die Gierrate um die Gierachse, die Fahrtgeschwindigkeit, die Kurvengeschwindigkeit, die Drehgeschwindigkeit des Rads des Anhängers, die Drehgeschwindigkeit der Antriebsrolle und/oder die Drehgeschwindigkeit des Antriebsmotors dienen. Hierbei wird insbesondere die Fahrtrichtung eine Rolle spielen, da der Bediener mit Hilfe des Fahrtgebers in einfacher Weise eine Vorwärts- bzw. Rückwärtsfahrt einerseits oder auch entsprechende Kurvenfahrten (ebenfalls vorwärts oder rückwärts) andererseits vorgeben können sollte.

Der Begriff "Fahrbewegung" wird in Zusammenhang mit der Erfindung als Oberbegriff für eine Vielzahl einzelner physikalischer Größen verwendet, die im weitesten Sinne die Bewegung des Anhängers betreffen: Unter "Ausrichtung" ist eine Stellung des Anhängers in einem Inertialsystem bzw. Übergrund zu verstehen. Als "Fahrtrichtung" ist die Bewegungsrichtung des Anhängers in einem Inertialsystem, z.B. dem Erdmagnetfeld, oder aber auch der "Kurs über Grund" zu sehen, der der tatsächlichen Bewegung des Anhängers über dem Boden entspricht.

Der Fahrtgeber kann eine Fernsteuerungseinrichtung aufweisen, zum Eingeben von Steuerbefehlen durch einen Bediener. Der Bediener kann dann mit gewissem Abstand zu dem Anhänger stehen und die gewünschten Fahrbefehle vorgeben.

Die Bewegungserfassungseinrichtung kann in vielfältiger Weise ausgestaltet sein. Insbesondere kann die Bewegungserfassungseinrichtung einen Gierratensensor, einen Kreiselkompass (auch einen elektronischen Kreisel), einen elektronischen Kompass, einen optischen Faserkreisel, einen Erdmagnetfeldsensor, einen Empfänger für Ortskoordinaten von Satelliten (Empfänger z.B. für GPS-Signale oder Galileo-Signale), einen Beschleunigungssensor, eine optische Detektionsvorrichtung zum optischen Bestimmen einer Relativbewegung des Anhängers relativ zu der Umgebung oder eine Kombination von wenigstens zwei dieser Komponenten aufweisen.

Bei den Sensoren kann es sich um heute übliche und käufliche Detektoren handeln, die z.B. in Kraftfahrzeugen eingesetzt werden, um die Eigenbewegung der Fahrzeuge sowohl bei Geradeausfahrt als auch bei Kurvenfahrt erfassen zu können. Die Sensoren können an geeigneter Stelle in dem Anhänger angeordnet werden, um möglichst wirkungsvoll die Bewegung des Anhängers zu ermitteln. So kann es einerseits sinnvoll sein, einen entsprechenden Sensor im Bereich der durch den Schwerpunkt des Anhängers verlaufenden Gierachse anzuordnen. Ebenso könnte ein Sensor an einer Stelle möglichst weit von der Gierachse entfernt platziert sein, um auf diese Weise besonders feinfühlig Drehbewegungen um die Gierachse erkennen zu können.

Der elektronische Kompass bzw. Fluxkompass dient zur Beobachtung des Erdmagnetfelds in Relation zu der Bewegung des Anhänger. Aufgrund von Änderungen des Erdmagnetfelds kann er die Bewegungen des Anhängers detektieren.

Durch eine Kombination von mehreren Sensoren oder Detektoren kann die Genauigkeit der Bewegungserfassung verbessert werden.

Bei der optischen Detektionsvorrichtung ist es z.B. möglich, die Relativbewegung des Untergrundes zum Anhänger zu erfassen. So kann beispielsweise eine entsprechend ausgebildete Kamera den Boden unterhalb des Anhängers beobachten und aufgrund der Relativbewegung des Bodens Rückschlüsse auf die Bewegung des Anhängers ziehen.

Die Rangierantriebe können durch die Fahrtregelungseinrichtung getrennt voneinander ansteuerbar sein, wobei durch die Fahrtregelungseinrichtung die Drehzahl und/oder die Drehrichtung der Rangierantriebe ansteuerbar ist. Wenn die Rangierantriebe in der oben beschriebenen Weise jeweils auf einer Seite des Anhängers angeordnet sind, lässt sich durch die individuelle Ansteuerung der Rangierantriebe nahezu jedes beliebige Bewegungsverhalten des Anhängers realisieren.

Dabei kann es möglich sein, dass die Drehzahl der Antriebsmotoren der Rangierantriebe stufenlos veränderbar ist, um ein besonders feinfühliges Beeinflussen der Fahrbewegung zu realisieren. Alternativ ist es für eine einfachere Bauart denkbar, dass die Drehzahl im Wesentlichen unveränderbar ist, so dass der Antriebsmotor lediglich ein- oder ausgeschaltet wird. Eine Drehrichtungsumkehr des Antriebsmotors sollte möglich sein, um die gewünschten Rangierbewegungen vollziehen zu können.

Bei einer Variante kann das von der Regelabweichung abhängige akustische und/oder optische Warnsignal bei Überschreiten eines vorgegebenen Grenzwerts für die Regelabweichung erzeugbar sein. Der Bediener kann auf diese Weise darüber informiert werden, dass der Anhänger nicht mit der gewünschten Genauigkeit den Fahrwegvorgaben des Bedieners folgt. So kann der Bediener insbesondere dann, wenn die Fahrtregelungseinrichtung selbst keine eigenen Steuermaßnahmen ergreift, rechtzeitig gewarnt werden, seinerseits korrigierende Steuereingriffe vornehmen zu müssen.

Bei einer Ausführungsform kann die Bewegungserfassungseinrichtung eine Bugraderfassungseinrichtung aufweisen, zum Erfassen einer Stellung einer Drehachse eines Bugrades des Anhängers. Die Stellung des Bugrads während einer Fahrbewegung des Anhängers kann als Anzeichen für die tatsächliche Bewegung des Anhängers genutzt werden. Es kann eine Information über die Stellung der Drehachse des Bugrads an die Fahrtregelungseinrichtung übermittelbar sein, wobei in der Fahrtregelungseinrichtung eine Regelstrategie hinterlegt sein kann, zum Berücksichtigen der Stellung der Drehachse des Bugrads beim Ansteuern des Fahrantriebs. Zum Beispiel kann die Regelstrategie derart sein, dass eine aufgrund der Stellung der Bugrad-Drehachse zu erwartende Zunahme der Regelabweichung zwischen Soll- und Istwert der Fahrbewegung minimiert wird.

Mit Hilfe der Bugraderfassungseinrichtung ist es möglich, die Stellung des Bugrads zu erkennen, welches üblicherweise am Ende einer Deichsel des Anhängers vorgesehen ist.

Bei einer Ausführungsform kann ein an dem Anhänger anordenbares Abstandswarnsystem vorgesehen sein, zum Erkennen von Hindernissen im Bereich des Anhängers und zum Erzeugen eines entsprechenden Abstandswarnsignals. Ein derartiges Abstandswarnsystem ist im Prinzip aus der GB 2 432 247 bekannt. Das Vorsehen eines derartigen Abstandswarnsystems in Verbindung mit der Fahrtregelungseinrichtung zur Fahrstabilisierung des Rangiersystems kann vorteilhaft sein.

Insbesondere kann aufgrund des Abstandswarnsignals ein optisches und/oder akustisches Signal erzeugbar sein oder durch die Fahrtregelungseinrichtung eine Reduzierung der Fahrtgeschwindigkeit und/oder ein Stoppen der Fahrbewegung bewirkbar sein. Somit kann entweder der Bediener ein entsprechendes Signal erhalten, dass sich der Anhänger einem Hindernis in problematischer Weise angenähert hat und damit besondere Sorgfalt erforderlich ist. Bei der Ankopplung an die Fahrtregelungseinrichtung kann sogar die Verminderung der Fahrtgeschwindigkeit oder gar ein vollständiges Stoppen der Fahrtbewegung erreicht werden, um eine Kollision des Anhängers mit dem Hindernis zu verringern.

Das Abstandswarnsystem kann auf optischer oder akustischer Basis aufgebaut sein. Bei Kraftfahrzeugen hat sich die Nutzung von Ultraschallsensoren bewährt, die bei Einparkassistenten genutzt werden, um ein Annähern des Kraftfahrzeugs an ein Hindernis zu erkennen und dem Fahrer zu melden.

Schließlich wird ein Verfahren zum Stabilisieren der Fahrbewegung eines Anhängers angegeben, mit einem Rangiersystem, durch das wenigstens zwei an gegenüberliegenden Seiten des Anhängers vorgesehene Räder individuell antreibbar sind. Das Verfahren umfasst die Maßnahmen
- Bestimmen einer Soll-Fahrbewegung des Anhängers;
- Erfassen einer Ist-Fahrbewegung des Anhängers.

Weiterhin ermöglicht das Verfahren wenigstens eine der beiden folgenden Maßnahmen:
- Vergleichen der Ist-Fahrbewegung mit der Soll-Fahrbewegung und individuelles Antreiben der Räder, um eine Abweichung zwischen der Ist-Fahrbewegung und der Soll-Fahrbewegung zu verringern, vorzugsweise zu minimieren; und/oder
- Erzeugen eines akustischen und/oder optischen Warnsignals, wenn die Abweichung zwischen der Ist-Fahrbewegung und der Soll-Fahrbewegung eine vorgegebene Grenze übersteigt.

Mit Hilfe des Verfahrens kann der Bediener die Soll-Fahrbewegung des Anhängers bestimmen, z.B. durch Betätigen einer Fernbedienung. Die tatsächliche Fahrbewegung des Anhängers wird dann durch eine geeignete Messeinrichtung erfasst. Die vom Bediener gegebenen Fahrbefehle können aufgrund der gemessenen Ist-Fahrbewegung des Anhängers korrigiert werden, so dass die tatsächliche Fahrbewegung des Anhängers der Soll-Fahrbewegung angenähert wird.

Der Eingriff in die Steuerung kann stufenlos erfolgen, wenn die Antriebsmotoren des Rangiersystems eine stufenlose Regelbarkeit der Motordrehzahl ermöglichen. Ebenso ist es z.B. bei an sich nicht-regelbaren, also nur ein- und ausschaltbaren Motoren möglich, die Motoren mithilfe der Steuerung gepulst ein- und auszuschalten, um eine Art "Stufenlosigkeit" zu simulieren, ähnlich der Wirkung einer Pulsweiten-Modulation. Je nach Dauer der Phasen des Einschaltens und des Ausschaltens erreichen die Motoren eine bestimmte Drehzahl, die sich aufgrund der Trägheit des Systems auch bei einem Umschalten zwischen Ein und Aus nicht sprunghaft ändert. Bei entsprechend kurzen Schaltphasen entsteht so zumindest für den Bediener der Eindruck der Stufenlosigkeit einer Motorregelung, obwohl der Motor nur binär ein- und ausschaltbar ist.

Die Messeinrichtung (Bewegungserfassungseinrichtung) kann insbesondere die Drehung des Anhängers um die Hochachse (Gierbewegung) und die Längsbewegung (vorwärts, rückwärts) erfassen. Dabei kann die Bewegung in Längsrichtung näherungsweise bestimmt werden, indem die Drehung der Antriebsrollen des Rangierantriebs gemessen wird. Die Messung der Bewegung um die Hochachse (Gierachse) kann durch einen elektronischen Kompass erfolgen, der z.B. in die elektronische Steuerung des Rangierantriebs integriert sein kann.

Je nach Aufwand bei der Ausgestaltung der Bewegungserfassungseinrichtung und der Regelalgorithmen in der Fahrtregelungseinrichtung lassen sich unterschiedliche Regelverhalten einstellen. Bei einem relativ einfachen Regelungsfall ist ein Kreiselkompass vorgesehen, der mit einer zugehörigen Regelung versucht, einer durch eine Störung hervorgerufenen Drehung um die Gierachse des Anhängers entgegenzuwirken, es sei denn, dass die Drehung einer vom Bediener gewünschten Kurvenvorgabe entspricht. Wenn die durch Fremdeinwirkung hervorgerufene Drehung jedoch zu stark ist, wird die Regelung überwunden und eine dauerhafte Regelabweichung stellt sich ein. Bei einer aufwendigeren Regelung ist es dagegen möglich, dass durch die Bewegungserfassungseinrichtung eine Abweichung der Fahrtrichtung festgestellt und ausgeregelt wird. Das bedeutet, dass sich der Anhänger immer wieder in die gleiche Richtung bewegen wird. Ein durch Fremdeinwirkung hervorgerufener Parallelversatz des Anhängers lässt sich dadurch jedoch nicht korrigieren.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: in schematischer Draufsicht einen Anhänger mit dem erfindungsgemäßen Rangiersystem;
- **Fig. 2**: eine Draufsicht auf eine Fernbedienungseinheit für das Rangiersystem; und
- **Fig. 3**: ein Blockdiagramm des Rangiersystems.

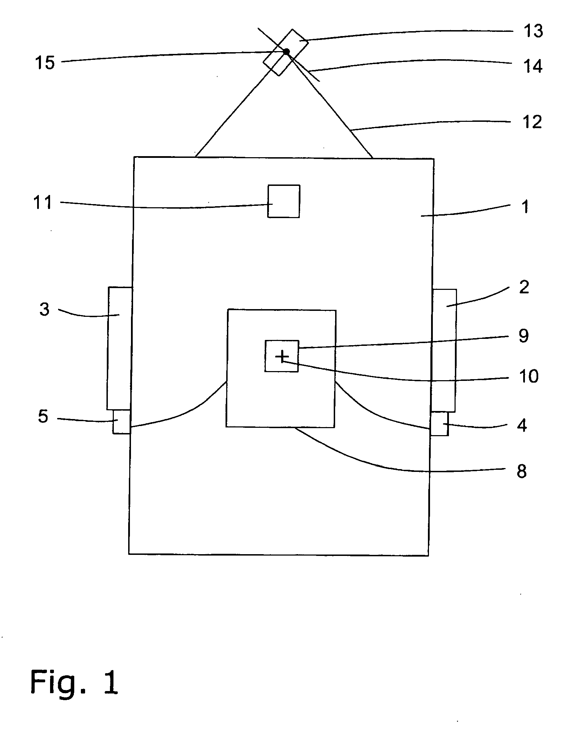

Fig. 1 zeigt in schematischer Draufsicht einen Anhänger 1, der mit dem erfindungsgemäßen Rangiersystem ausgestattet ist, wobei das Rangiersystem in der Lage ist, nicht nur den Anhänger 1 zu bewegen, sondern die Bewegung auch mit einer Fahrstabilisierung durchzuführen.

Der Anhänger 1 weist eine Fahrzeugachse auf, an deren Enden jeweils ein Rad 2, 3 auf den beiden gegenüberliegenden Seiten des Anhängers 1 angeordnet ist. Jedem der Räder 2, 3 ist ein eigener, zu dem Rangiersystem gehörender Rangierantrieb 4, 5 zugeordnet. Die beiden Rangierantriebe 4, 5 bilden gemeinsam einen Fahrantrieb für den Anhänger 1.

Bei den in Fig. 1 nur schematisch dargestellten Rangierantrieben 4, 5 kann es sich um solche handeln, wie aus der EP 0 827 898 A1 und EP 1 925 540 A1 bekannt. Selbstverständlich können die Rangierantriebe 4, 5 auch in anderer Weise aufgebaut sein.

Die Rangierantriebe 4, 5 dienen dazu, das jeweils ihnen zugeordnete Rad 2, 3 dann drehend anzutreiben, wenn der Anhänger 1 von einer Zugmaschine getrennt ist. In diesem Fall ist es möglich, dass Antriebsmotoren und Antriebsrollen der Rangierantriebe 4, 5 an die Laufflächen der zugeordneten Räder 2, 3 bewegt und angedrückt werden, so dass nachfolgend die Antriebsmotoren der Rangierantriebe 4, 5 über die Antriebsrollen die beiden Räder 2, 3 antreiben.

Je nach Ansteuerung der Rangierantriebe 4, 5 ist es möglich, die Räder 2, 3 im Gleichlauf, d.h. mit gleicher Drehzahl und gleicher Richtung anzutreiben. Dann vollzieht der Anhänger 1 eine Geradeausbewegung in Vorwärts- oder Rückwärtsrichtung.

Wenn jedoch die Rangierantriebe 4, 5 die Räder 2, 3 unterschiedlich antreiben, ist eine entsprechende Kurvenbewegung des Anhängers 1 die Folge.

So ist es z.B. möglich, lediglich den Rangierantrieb 5 vorwärts anzutreiben, so dass sich das Rad 3 vorwärts dreht, während der Rangierantrieb 4 abgeschaltet ist oder lediglich kurze pulsierende Bewegungen vollzieht, so dass das Rad 2 weitgehend stillsteht. Eine Kurvenfahrt um das weitgehend stillstehende Rad 2 ist die Folge. Durch die pulsierende Bewegung des Rangierantriebs 4 wird lediglich verhindert, dass das Rad 2 zu stark über den Untergrund "radiert".

In einem Fall ist es möglich, dass der Rangierantrieb 5 mit hoher Geschwindigkeit und der Rangierantrieb 4 mit geringer Geschwindigkeit in die gleiche Richtung antreiben, so dass sich das Rad 3 mit höherer Geschwindigkeit als das Rad 2 dreht. Dann bewegt sich der Anhänger 1 auf einem größeren Kurvenradius nach rechts.

Wenn die Rangierantriebe 4, 5 die Räder 2, 3 mit unterschiedlicher Drehrichtung antreiben, kann eine Drehung des Anhängers auf der Stelle bewirkt werden.

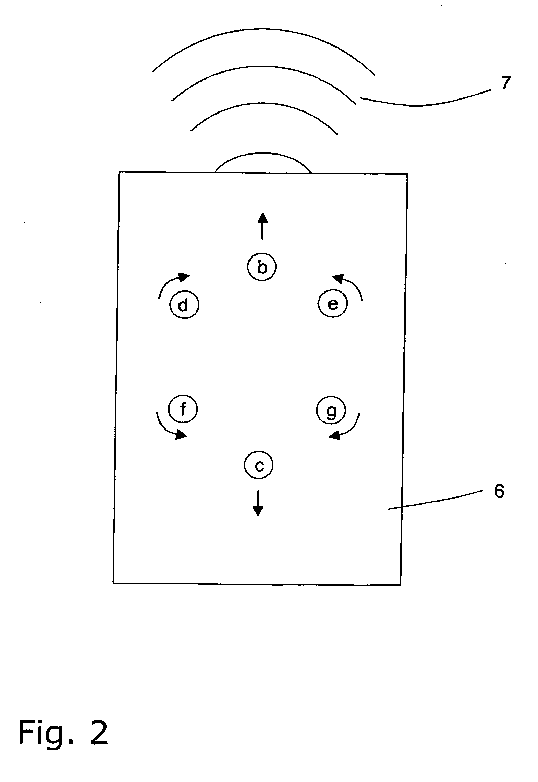

Die Möglichkeiten der Ansteuerung der Rangierantriebe 4, 5 sind z.B. auf der in Fig. 2 dargestellten Fernbedienung 6 erkennbar.

Die Fernbedienung 6 weist eine Reihe von Tasten b bis g auf. Eine Betätigung der Taste b bewirkt eine Vorwärtsbewegung des Anhängers (beide Räder 2, 3 drehen vorwärts). In diesem Fall werden also die Rangierantriebe 4, 5 in entsprechender Weise ansteuert, um die Vorwärtsbewegung zu bewirken. Entsprechend fährt der Anhänger bei Betätigung der Taste c rückwärts, weil beide Räder rückwärts drehen.

Taste d bedeutet, dass der Anhänger nach rechts vorwärts fährt (linkes Rad 3 dreht vorwärts). Taste e: Anhänger fährt links vorwärts (rechtes Rad 2 dreht vorwärts). Taste f: Anhänger fährt rechts rückwärts (linkes Rad 3 dreht rückwärts). Taste g: Anhänger fährt links rückwärts (rechts Rad 2 dreht rückwärts).

Die Fernbedienung 6 erzeugt Signale 7, z.B. Infrarot- oder Funksignale, die von einer an dem Anhänger 1 vorgesehenen Steuereinrichtung 8 empfangen werden können.

Die Steuereinrichtung 8 steuert die Rangierantriebe 4, 5 an, um die gewünschte Fahrbewegung zu erzielen.

Die Steuereinrichtung 8 weist einen als Bewegungserfassungseinrichtung dienenden elektronischen Kompass 9 auf, der im Bereich einer Gierachse 10 (Hochachse) des Anhängers 1 angeordnet ist. Der elektronische Kompass 9 kann aber auch an anderen Stellen des Anhängers vorgesehen sein. Dabei kann es sinnvoll sein, den elektronischen Kompass 9 an einem Ort zu platzieren, an dem Störeinflüsse durch ferromagnetische Materialen (z.B. durch die Struktur des Anhängers) oder durch starke elektrische Ströme gering sind, um eine präzise Detektion des Erdmagnetfelds zu gewährleisten. Mit Hilfe des elektronischen Kompasses 9 kann somit eine Drehbewegung des Anhängers 1 um seine Gierachse 10 erfasst werden.

Anstelle des elektronischen Kompasses 9 kann auch ein anderer geeigneter Sensor als Bewegungserfassungseinrichtung genutzt werden, z.B. ein Drehraten- bzw. Gierratensensor.

Darüber hinaus kann z.B. eine ebenfalls ein als Bewegungserfassungseinrichtung dienender Beschleunigungssensor 11 an dem Anhänger 1 vorgesehen und mit der Steuereinrichtung verbunden sein. Der Beschleunigungssensor 11 erkennt die Vorwärts- und Rückwärtsbewegung des Anhängers 1 bzw. liefert zusätzliche Informationen über die tatsächliche Bewegung des Anhängers.

Die Steuereinrichtung 8 kann unter Berücksichtigung der verschiedenen Informationen von dem elektronischen Kompass 9, dem Beschleunigungssensor 11, aber auch von den Rangierantrieben 4, 5, insbesondere aufgrund der Drehzahl der Antriebsmotoren der Rangierantriebe 4, 5 sehr präzise Rückschlüsse auf die tatsächliche Bewegung des Anhängers 1 ziehen.

In der Steuereinrichtung 8 ist darüber hinaus eine Fahrtregelungseinrichtung vorgesehen, mit der die so ermittelte Istbewegung des Anhängers mit der vom Bediener über die Fernbedienung 6 vorgegebenen Sollbewegung des Anhängers verglichen werden kann.

Wenn Abweichungen zwischen Istbewegung und Sollbewegung festgestellt werden, kann die Steuereinrichtung 8 eigenständig Steuermaßnahmen ergreifen, um die Abweichung wenigstens zu verringern, vorzugsweise sogar zu minimieren. Insbesondere kann die Steuereinrichtung 8 bei Berücksichtigung entsprechend hinterlegter Regelstrategien die Rangierantriebe 4, 5 bzw. die dort vorgesehenen Antriebsmotoren ansteuern, um ein Annähern der Istbewegung des Anhängers 1 an die geforderte Sollbewegung zu erreichen.

Übliche Anhänger 1 weisen am Ende einer zum Ankoppeln einer Zugmaschine vorgesehenen Deichsel 12 ein Bugrad 13 auf. Die Stellung des Bugrads 13, insbesondere die Stellung der Drehachse 14 des Bugrads 13 kann sich in Abhängigkeit von der Fahrbewegung des Anhängers verändern, so dass sie Informationen über die tatsächliche Fahrbewegung des Anhängers liefert. Zu diesem Zweck ist eine Bugraderfassungseinrichtung 15 vorgesehen, mit der die Stellung des Bugrads 13 bzw. die Stellung der Drehachse 14 des Bugrads 13 um die Hochachse erkannt werden kann.

Die Information über die Stellung des Bugrads 13 wird von der in diesem Fall ebenfalls als Bewegungserfassungseinrichtung dienenden Bugraderfassungseinrichtung 15 an die Steuereinrichtung 8 geliefert, wo die Information auf Basis einer geeigneten Regelstrategie weiterverarbeitet werden kann. Selbstverständlich können als Bestandteil der Bewegungserfassungseinrichtung zusätzlich zu der Bugraderfassungseinrichtung weitere, insbesondere die oben bereits erläuterten Sensoren vorgesehen sein.

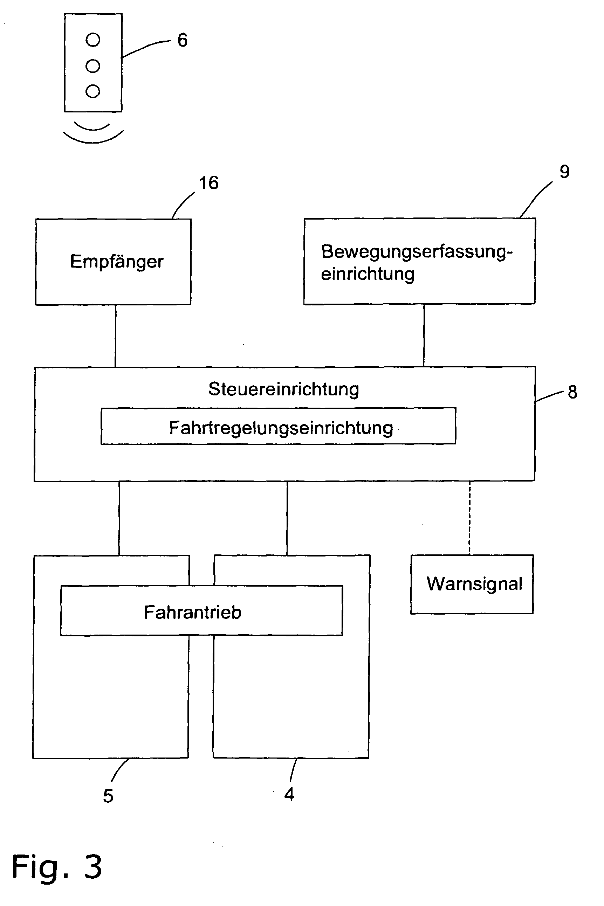

In Fig. 3 ist das Rangiersystem mit Fahrstabilisierung als Blockdiagramm gezeigt.

Über die Fernbedienung 6 kann der Bediener seinen Fahrwunsch eingeben, der als Funk- oder optisches Signal an einen am Anhänger vorgesehenen Empfänger 16 übermittelt wird. Der Empfänger 16 ist mit der Steuereinrichtung 8 gekoppelt und überträgt das empfangene Signal als Sollwert für die Fahrbewegung an die Steuereinrichtung 8.

Die Bewegungserfassungseinrichtung 9 ist ebenfalls mit der Steuereinrichtung 8 gekoppelt und liefert ein Signal, dass Istwert für die Fahrbewegung entspricht.

Mithilfe der in die Steuereinrichtung 8 integrierten Fahrtregelungseinrichtung versucht die Steuereinrichtung 8, die Abweichung zwischen Sollwert und Istwert zu verringern bzw. zu minimieren, indem die beiden Rangierantriebe 4 und 5 entsprechend angesteuert werden. Dabei kann eine nicht dargestellte Motorsteuerelektronik genutzt werden, die die Ansteuerung der Antriebsmotoren in den Rangierantrieben 4, 5 bewirkt.

Wie oben erläutert, dienen die beiden Rangierantrieb 4, 5 gemeinsam als Fahrantrieb und können so die gewünschte Fahrbewegung des Anhängers bewirken.

Aufgrund der Fahrstabilisierungswirkung des Rangiersystems ist es möglich, einen Anhänger 1 auch bei erheblichen Störeinflüssen, z.B. durch Bodenunebenheiten u.ä. präzise auf einer geraden Bahn oder mit einer konstanten Kurvenfahrt zu bewegen. Die durch die Störungen bewirkten Beeinträchtigungen der Graden- oder Kurvenbewegung werden durch Ansteuern der Rangierantriebe 4, 5 herausgeregelt, so dass der Bediener den Anhänger 1 in sehr viel einfacherer Weise steuern kann, als dies beim Stand der Technik möglich ist.

## Patentansprüche

1. Rangiersystem für einen Anhänger (1), mit
- einem an dem Anhänger (1) anordenbaren Fahrantrieb (4, 5) zum Erzeugen einer Fahrbewegung des Anhängers (1);
- einem Fahrtgeber (6) zum Vorgeben eines Sollwerts für die Fahrbewegung des Anhängers (1);
- einer Bewegungserfassungseinrichtung (9, 11) zum Erfassen eines Istwerts der Fahrbewegung; und mit
- einer Fahrtregelungseinrichtung (8) zum Vergleichen des Istwerts mit dem Sollwert und Bilden einer Regelabweichung als Differenz zwischen dem Istwert und dem Sollwert;
wobei die Fahrtregelungseinrichtung (8) ausgebildet ist, um
- die Regelabweichung durch Ansteuern des Fahrantriebs (4, 5) zu vermindern; und/oder um
- in Abhängigkeit von der Regelabweichung ein Warnsignal zu erzeugen.

2. Rangiersystem nach Anspruch 1, **dadurch gekennzeichnet, dass**
- der Fahrantrieb wenigstens zwei Rangierantriebe (4, 5) aufweist;
- die Rangierantriebe (4, 5) auf gegenüberliegenden Seiten des Anhängers (1) jeweils im Bereich eines Rads (2, 3) des Anhängers (1) anordenbar sind; und dass
- durch jeden der Rangierantriebe (4, 5) jeweils das zugeordnete Rad (2, 3) des Anhängers (1) drehend antreibbar ist.

3. Rangiersystem nach Anspruch 1 oder 2, **dadurch gekennzeichnet, dass** die Bewegungserfassungseinrichtung (9, 11) an dem Anhänger (1) anordenbar ist.

4. Rangiersystem nach einem der vorangehenden Ansprüche, **dadurch gekennzeichnet, dass** wenigstens ein Teil der Bewegungserfassungseinrichtung (9, 11) an dem Anhänger (1) räumlich getrennt von den Rangierantrieben (4, 5) anordenbar ist.

5. Rangiersystem nach einem der vorangehenden Ansprüche, **dadurch gekennzeichnet, dass** jeder der Rangierantriebe (4, 5) aufweist:
- eine Befestigungseinrichtung zum Befestigen des Rangierantriebs (4, 5) an dem Anhänger (1);
- einen relativ zu der Befestigungseinrichtung bewegbaren Träger;
- einen von dem Träger gehaltenen Antriebsmotor; und
- eine von dem Antriebsmotor drehend antreibbare Antriebsrolle;

6. Rangiersystem nach einem der vorangehenden Ansprüche, **dadurch gekennzeichnet, dass**
- die Fahrbewegung des Anhängers (1) eine Fahrtrichtung, eine Ausrichtung des Anhängers, eine Drehrate, eine Gierrate um die Gierachse (10), eine Fahrtgeschwindigkeit, eine Kurvengeschwindigkeit, eine Drehgeschwindigkeit eines Rads (2, 3) des Anhängers, eine Drehgeschwindigkeit einer Antriebsrolle eines Rangierantriebs (4, 5) und/oder eine Drehgeschwindigkeit eines Antriebsmotors eines Rangierantriebs (4, 5) aufweist; und dass
- der Fahrtgeber (6) zum Vorgeben eines Sollwerts für die Fahrtrichtung, die Ausrichtung, die Drehrate, die Gierrate um die Gierachse (10), die Fahrtgeschwindigkeit, die Kurvengeschwindigkeit, die Drehgeschwindigkeit des Rads (2, 3) des Anhängers (1), die Drehgeschwindigkeit der Antriebsrolle und/oder die Drehgeschwindigkeit des Antriebsmotors dient.

7. Rangiersystem nach einem der vorangehenden Ansprüche, **dadurch gekennzeichnet, dass** der Fahrtgeber eine Fernsteuerungseinrichtung (6) aufweist, zum Eingeben von Steuerbefehlen durch einen Bediener.

8. Rangiersystem nach einem der vorangehenden Ansprüche, **dadurch gekennzeichnet, dass** die Bewegungserfassungseinrichtung (9, 11) einen Gierratensensor, einen Kreiselkompass, einen elektronischen Kompass, einen optischen Faserkreisel, einen Erdmagnetfeldsensor, einen Empfänger für Ortskoordinaten-Signale von Satelliten, einen Beschleunigungssensor, eine optische Detektionsvorrichtung zum optischen Bestimmen einer Relativbewegung des Anhängers relativ zu der Umgebung oder eine Kombination von wenigstens zwei dieser Komponenten aufweist.

9. Rangiersystem nach einem der vorangehenden Ansprüche, **dadurch gekennzeichnet, dass**
- durch die Fahrtregelungseinrichtung (8) die Rangierantriebe (4, 5) getrennt voneinander ansteuerbar sind; und dass
- durch die Fahrtregelungseinrichtung (8) die Drehzahl und/oder die Drehrichtung der Rangierantriebe (4, 5) ansteuerbar ist.

10. Rangiersystem nach einem der vorangehenden Ansprüche, **dadurch gekennzeichnet, dass** das von der Regelabweichung abhängige Warnsignal als akustisches und/oder optisches Signal bei Überschreiten eines vorgegebenen Grenzwerts für die Regelabweichung erzeugbar ist.

11. Rangiersystem nach einem der vorangehenden Ansprüche, **dadurch gekennzeichnet, dass**
- die Bewegungserfassungseinrichtung eine Bugraderfassungseinrichtung (15) aufweist, zum Erfassen einer Stellung einer Drehachse (14) eines Bugrads (13) des Anhängers (1);
- eine Information über die Stellung der Drehachse (14) des Bugrads (13) an die Fahrtregelungseinrichtung (8) übermittelbar ist; und dass
- in der Fahrtregelungseinrichtung (8) eine Regelstrategie hinterlegt ist, zum Berücksichtigen der Stellung der Drehachse (14) des Bugrads (13) beim Ansteuern des Fahrantriebs (4, 5).

12. Rangiersystem nach einem der vorangehenden Ansprüche, **dadurch gekennzeichnet, dass** ein an dem Anhänger anordenbares Abstandswarnsystem vorgesehen ist, zum Erkennen von Hindernissen im Bereich des Anhängers und Erzeugen eines entsprechenden Abstandswarnsignals.

13. Rangiersystem nach einem der vorangehenden Ansprüche, **dadurch gekennzeichnet, dass** aufgrund des Abstandswarnsignals
- ein optisches Signal und/oder ein akustisches Signal und/oder ein für den Bediener spürbares Signal, insbesondere ein Vibrationssignal erzeugbar ist; oder/und
- durch die Fahrtregelungseinrichtung eine Reduzierung der Fahrtgeschwindigkeit und/oder ein Stoppen der Fahrbewegung bewirkbar ist.

14. Verfahren zum Stabilisieren der Fahrbewegung eines Anhängers (1), mit einem Rangiersystem (4, 5), durch das wenigstens zwei an gegenüberliegenden Seiten des Anhängers vorgesehene Räder (2, 3) individuell antreibbar sind, mit den Maßnahmen
- Bestimmen einer Soll-Fahrbewegung des Anhängers (1);
- Erfassen einer Ist-Fahrbewegung des Anhängers (1);
weiterhin mit wenigstens einer der beiden folgenden Maßnahmen
- Vergleichen der Ist-Fahrbewegung mit der Soll-Fahrbewegung und individuelles Antreiben der Räder (2, 3), um eine Abweichung zwischen der Ist-Fahrbewegung und der Soll-Fahrbewegung zu verringern; und/oder
- Erzeugen eines akustischen und/oder optischen Warnsignals, wenn die Abweichung zwischen der Ist-Fahrbewegung und der Soll-Fahrbewegung eine vorgegebene Grenze übersteigt.

## Claims

1. A maneuvering system for a trailer (1), comprising
- a travel drive (4, 5) adapted to be arranged on the trailer (1) to produce a travelling motion of the trailer (1);
- a travel transmitter (6) to specify a set value for the travelling motion of the trailer (1);
- a motion sensing device (9, 11) to sense an actual value of the travelling motion; and comprising
- a travel control device (8) to compare the actual value with the set value, and to form a control deviation as a difference between the actual value and the set value;
the travel control device (8) being configured so as to
- reduce the control deviation by piloting the travel drive (4, 5); and/or to
- generate a warning signal as a function of the control deviation.

2. The maneuvering system according to claim 1, **characterized in that**
- the travel drive has at least two maneuvering drives (4, 5);
- the maneuvering drives (4, 5) are adapted to be arranged on opposite sides of the trailer (1), each in the region of a wheel (2, 3) of the trailer (1); and **in that**
- by means of each of the maneuvering drives (4, 5), the respective associated wheel (2, 3) of the trailer (1) can be rotatably driven.

3. The maneuvering system according to claim 1 or 2, **characterized in that** the motion sensing device (9, 11) can be arranged on the trailer (1).

4. The maneuvering system according to any of the preceding claims, **characterized in that** at least part of the motion sensing device (9, 11) can be arranged on the trailer (1) so as to be spatially separated from the maneuvering drives (4, 5).

5. The maneuvering system according to any of the preceding claims, **characterized in that** each of the maneuvering drives (4, 5) comprises:
- a fastening device for fastening the maneuvering drive (4, 5) to the trailer (1);
- a support movable relative to the fastening device;
- a drive engine held by the support; and
- a driving roller adapted to be rotatably driven by the drive engine.

6. The maneuvering system according to any of the preceding claims, **characterized in that**
- the travelling motion of the trailer (1) comprises a direction of travel, an orientation of the trailer, a rotation rate, a yaw rate about the yaw axis (10), a travel speed, a curve speed, a rotational speed of a wheel (2, 3) of the trailer, a rotational speed of a driving roller of a maneuvering drive (4, 5), and/or a rotational speed of a drive engine of a maneuvering drive (4, 5); and **in that**
- the travel transmitter (6) serves to specify a set value for the direction of travel, the orientation, the rotation rate, the yaw rate about the yaw axis (10), the travel speed, the curve speed, the rotational speed of the wheel (2, 3) of the trailer (1), the rotational speed of the driving roller, and/or the rotational speed of the drive engine.

7. The maneuvering system according to any of the preceding claims, **characterized in that** the travel transmitter comprises a remote control device (6) for entering control commands by an operator.

8. The maneuvering system according to any of the preceding claims, **characterized in that** the motion sensing device (9, 11) comprises a yaw rate sensor, a gyroscopic compass, an electronic compass, a fiber optic gyroscope, a terrestrial magnetic field sensor, a receiver for local coordinate signals from satellites, an acceleration sensor, an optic detection device for the optic determination of a relative motion of the trailer relative to the environment, or a combination of at least two of these components.

9. The maneuvering system according to any of the preceding claims, **characterized in that**
- the maneuvering drives (4, 5) can be piloted separately from each other by the travel control device (8); and **in that**
- the speed of rotation and/or the direction of rotation of the maneuvering drives (4, 5) can be piloted by the travel control device (8).

10. The maneuvering system according to any of the preceding claims, **characterized in that** the warning signal depending on the control deviation can be produced as an acoustic and/or optic signal when a predetermined limiting value for the control deviation is exceeded.

11. The maneuvering system according to any of the preceding claims, **characterized in that**
- the motion sensing device comprises a jockey wheel sensing device (15) to sense a position of a rotation axis (14) of a jockey wheel (13) of the trailer (1);
- a piece of information about the position of the rotation axis (14) of the jockey wheel (13) can be transmitted to the travel control device (8); and **in that**
- a control strategy is stored in the travel control device (8) to take the position of the rotation axis (14) of the jockey wheel (13) into account upon piloting of the travel drive (4, 5).

12. The maneuvering system according to any of the preceding claims, **characterized in that** a proximity warning system adapted to be arranged on the trailer is provided for detecting obstacles in the region of the trailer and for producing an appropriate proximity warning signal.

13. The maneuvering system according to any of the preceding claims, **characterized in that** due to the proximity warning signal
- an optic signal and/or an acoustic signal and/or a signal perceptible to the operator, in particular a vibrating signal can be produced; or/and
- a reduction of the travel speed and/or a stop of the travelling motion can be achieved by means of the travel control device.

14. A method of stabilizing the travelling motion of a trailer (1), comprising a maneuvering system (4, 5) by means of which at least two wheels (2, 3) provided on opposite sides of the trailer can be driven individually, comprising the steps of
- determining a desired travelling motion of the trailer (1);
- sensing an actual travelling motion of the trailer (1);
further comprising at least one of the two following steps
- comparing the actual travelling motion with the desired travelling motion, and driving the wheels (2, 3) individually to reduce a deviation between the actual travelling motion and the desired travelling motion; and/or
- producing an acoustic and/or optic warning signal if the deviation between the actual travelling motion and the desired travelling motion exceeds a predetermined limit.

## Revendications

1. Système de manoeuvre pour une remorque (1), comportant
- un entraînement de déplacement (4, 5) qui peut être agencé sur la remorque (1) pour produire un mouvement de déplacement de la remorque (1) ;
- un transmetteur de déplacement (6) pour fixer une valeur théorique pour le mouvement de déplacement de la remorque (1) ;
- un dispositif de détection de mouvement (9, 11) pour détecter une valeur réelle du mouvement de déplacement ; et comportant
- un dispositif de régulation de déplacement (8) pour comparer la valeur réelle à la valeur théorique, et pour réaliser un écart de réglage en tant que différence entre la valeur réelle et la valeur théorique ;
le dispositif de régulation de déplacement (8) étant réalisé de manière à
- réduire l'écart de réglage par le pilotage de l'entraînement de déplacement (4, 5) ; et/ou
- générer un signal avertisseur en fonction de l'écart de réglage.

2. Système de manoeuvre selon la revendication 1, **caractérisé en ce que**
- l'entraînement de déplacement présente au moins deux entraînements de manoeuvre (4, 5) ;
- les entraînements de manoeuvre (4, 5) peuvent être agencés sur des côtés opposés de la remorque (1), chacun dans la zone d'une roue (2, 3) de la remorque (1) ; et **en ce que**
- au moyen de chacun des entraînements de manoeuvre (4, 5), la roue associée (2, 3) respective de la remorque (1) peut être entraînée en rotation.

3. Système de manoeuvre selon la revendication 1 ou 2, **caractérisé en ce que** le dispositif de détection de mouvement (9, 11) peut être agencé sur la remorque (1).

4. Système de manoeuvre selon l'une des revendications précédentes, **caractérisé en ce qu'**au moins une partie du dispositif de détection de mouvement (9, 11) peut être agencée sur la remorque (1) de manière à être éloignée dans l'espace des entraînements de manoeuvre (4, 5).

5. Système de manoeuvre selon l'une des revendications précédentes, **caractérisé en ce que** chacun des entraînements de manoeuvre (4, 5) présente :
- un dispositif de fixation pour la fixation de l'entraînement de manoeuvre (4, 5) sur la remorque (1) ;
- un support mobile par rapport au dispositif de fixation ;
- un moteur d'entraînement retenu par le support ; et
- un rouleau d'entraînement apte à être entraîné en rotation par le moteur d'entraînement.

6. Système de manoeuvre selon l'une des revendications précédentes, **caractérisé en ce que**
- le mouvement de déplacement de la remorque (1) comprend un sens de déplacement, une orientation de la remorque, une fréquence de rotation, une vitesse de lacet autour de l'axe de lacet (10), une vitesse de déplacement, une vitesse de virage, une vitesse de rotation d'une roue (2, 3) de la remorque, une vitesse de rotation d'un rouleau d'entraînement d'un entraînement de manoeuvre (4, 5) et/ou une vitesse de rotation d'un moteur d'entraînement d'un entraînement de manoeuvre (4, 5) ; et **en ce que**
- le transmetteur de déplacement (6) sert à fixer une valeur théorique pour le sens de déplacement, l'orientation, la fréquence de rotation, la vitesse de lacet autour de l'axe de lacet (10), la vitesse de déplacement, la vitesse de virage, la vitesse de rotation de la roue (2, 3) de la remorque (1), la vitesse de rotation du rouleau d'entraînement et/ou la vitesse de rotation du moteur d'entraînement.

7. Système de manoeuvre selon l'une des revendications précédentes, **caractérisé en ce que** le transmetteur de déplacement présente un dispositif de télécommande (6) pour l'entrée d'instructions de commande par un utilisateur.

8. Système de manoeuvre selon l'une des revendications précédentes, **caractérisé en ce que** le dispositif de détection de mouvement (9, 11) comprend un capteur de vitesse de lacet, un compas gyroscopique, un compas électronique, un gyroscope à fibre optique, un capteur de champ magnétique terrestre, un récepteur pour des signaux de coordonnées locales de satellites, un capteur d'accélération, un dispositif de détection optique pour la détermination optique d'un mouvement relatif de la remorque par rapport à l'entourage, ou une combinaison d'au moins deux de ces composants.

9. Système de manoeuvre selon l'une des revendications précédentes, **caractérisé en ce que**
- les entraînements de manoeuvre (4, 5) sont aptes à être pilotés séparément l'un de l'autre par le dispositif de régulation de déplacement (8) ; et **en ce que**
- le nombre de tours et/ou le sens de rotation des entraînements de manoeuvre (4, 5) est apte à être piloté par le dispositif de régulation de déplacement (8).

10. Système de manoeuvre selon l'une des revendications précédentes, **caractérisé en ce que** le signal avertisseur dépendant de l'écart de réglage peut être généré sous forme de signal acoustique et/ou optique lors du dépassement d'une valeur limite prédéterminée pour l'écart de réglage.

11. Système de manoeuvre selon l'une des revendications précédentes, **caractérisé en ce que**
- le dispositif de détection de mouvement présente un dispositif de détection de roue jockey (15) pour la détection d'une position d'un axe de rotation (14) d'une roue jockey (13) de la remorque (1) ;
- une information concernant la position de l'axe de rotation (14) de la roue jockey (13) peut être transmise au dispositif de régulation de déplacement (8) ; et **en ce que**
- une stratégie de régulation est mise en mémoire dans le dispositif de régulation de déplacement (8) pour tenir compte de la position de l'axe de rotation (14) de la roue jockey (13) lors du pilotage de l'entraînement de déplacement (4, 5).

12. Système de manoeuvre selon l'une des revendications précédentes, **caractérisé en ce qu'**il est prévu un système de contrôle de distance apte à être agencé sur la remorque pour l'identification d'obstacles dans la zone de la remorque et pour la génération d'un signal de contrôle de distance correspondant.

13. Système de manoeuvre selon l'une des revendications précédentes, **caractérisé en ce qu'**en raison du signal de contrôle de distance
- il est possible de générer un signal optique et/ou un signal acoustique et/ou un signal perceptible pour l'utilisateur, en particulier un signal vibrant ; ou/et
- il est possible de provoquer une réduction de la vitesse de déplacement et/ou un arrêt du mouvement de déplacement au moyen du dispositif de régulation de déplacement.

14. Procédé de stabilisation du mouvement de déplacement d'une remorque (1), comportant un système de manoeuvre (4, 5) au moyen duquel au moins deux roues (2, 3) prévues sur des côtés opposés de la remorque sont aptes à être entraînées individuellement, comportant les étapes de
- détermination d'un mouvement de déplacement théorique de la remorque (1) ;
- détection d'un mouvement de déplacement réel de la remorque (1) ; comportant en outre au moins l'une des deux étapes suivantes
- comparaison du mouvement de déplacement réel au mouvement de déplacement théorique, et entraînement individuel des roues (2, 3) pour réduire un écart entre le mouvement de déplacement réel et le mouvement de déplacement théorique ; et/ou
- génération d'un signal avertisseur acoustique et/ou optique lorsque l'écart entre le mouvement de déplacement réel et le mouvement de déplacement théorique dépasse une limite prédéterminée.
